# EUROPÄISCHE PATENTSCHRIFT

(11) **EP 4 282 259 B1**
(45) Veröffentlichungstag und Bekanntmachung des Hinweises auf die Patenterteilung: **08.04.2026**
(21) Anmeldenummer: 23172192.9
(22) Anmeldetag: 09.05.2023
(51) Int. Cl.: A01K 1/00, E01F 13/02, E06B 11/08

(54) **PASSAGE-ANORDNUNG**
PASSAGE ARRANGEMENT
PASSAGE DISPOSITION

(30) Priorität: 20.05.2022 DE 102022112707
(43) Veröffentlichungstag der Anmeldung: 29.11.2023
(73) Patentinhaber: Wanzl GmbH & Co. KGaA, 89340 Leipheim (DE)
(72) Erfinder: Lutzenberger, Thomas, 87739 Loppenhausen (DE); Fischer, Andreas, 89129 Öllingen (DE); Kempter, Andreas, 86465 Welden (DE)

(56) Entgegenhaltungen:
- AT-B- 410 884
- US-A1- 2009 128 284
- US-A1- 2022 068 065

## Beschreibung

Die Erfindung bezieht sich auf eine Passage-Anordnung gemäß dem Oberbegriff von Patentanspruch 1, zur Koordination der Laufwege von Personen, insbesondere in Verbindung mit dem Hindurchgehen dieser Personen durch einen nachfolgend auch als Gate bezeichneten, vorzugsweise selektiv sperr- und freigebbaren und konstruktiv seitlich begrenzten Durchgang.

Aus US 2022/068065 A1 ist eine Passage-Anordnung der oben genannten Art bekannt. Die Passage-Anordnung umfasst eine Laufbandeinrichtung bei welcher ein Laufbandrücklauf in einem Unterbodenbereich bewerkstelligt wird.

Aus US 2009/128284 A1 ist ein Personenführungssystem bekannt, bei welchem der Durchgang durch eine Gate-Einrichtung, sowie der Laufweg nach einer Passage der Gate-Einrichtung durch schwenkbar verlagerbare Führungselemente abstimmbar ist.

Aus AT 410 884 B ist eine Fütterungsanlage für in Gruppen gehaltene Tiere bekannt, wobei ein dort definierter Durchlaufweg mittels einer Umschaltklappe veränderbar ist.

Aus US2013002399A ist ein Gate bekannt, das eine Seitenbegrenzung und ein Türklappenpaar aufweist. Dieses Türklappenpaar bildet in einem ersten Schwenkzustand seiner Türklappen eine Sperre. Nach Maßgabe des Auswertungsergebnisses einer Zugangskontrolle sind die Türklappen in einen zweiten Schwenkzustand bringbar, der eine Passage eines ansonsten durch das Türklappenpaar in dem genannten ersten Schwenkzustand gesperrten und zwischen der Seitenbegrenzung verlaufenden Laufwegabschnittes ermöglicht.

Aus WO20104638 A1 ist eine Türgitteranordnung bekannt. Diese Türgitteranordnung umfasst Gitterelemente, die derart bedarfsgerecht positionierbar sind, dass sich durch diese Positionierung der Gitterelemente gewünschte und voneinander getrennte Durchgangswege in einem Durchgangsbereich ergeben.

Bei dem mittels sog. Gates abgesicherten Zugang von Personen zu reglementierten Bereichen besteht in der Praxis das Problem der Vermischung von Personenströmen mit unterschiedlichen Auswertungsmerkmalen.

Der Erfindung liegt die Aufgabe zugrunde, Lösungen zu schaffen durch welche es möglich wird, die Laufwege von Personen in Verbindung mit dem Durchgang derselben durch ein Gate verbessert zu koordinieren.

Die vorangehend genannte Aufgabe wird gemäß einem ersten Aspekt der vorliegenden Erfindung erfindungsgemäß gelöst durch eine Anordnung mit den in Patentanspruch 1 angegebenen Merkmalen.

Dadurch wird es auf vorteilhafte Weise möglich, im Rahmen des Durchgangs einer Person durch ein selektiv sperr oder freigebbares Gate, den Zugang der Person zu dem Gate oder den weiteren Laufweg der Person nach dem Durchgang durch das Gate nach Maßgabe von Informationen automatisiert abzustimmen, die im zeitlichen Rahmen der Passage vorliegen oder generiert werden. Die Generierung dieser Informationen und Entscheidungsgrundlagen kann beispielsweise über unterschiedliche hard- und/oder softwaregestützte Endgeräte erfolgen. Insbesondere können die für die Ansteuerung eines Antriebs der Führungsstruktur herangezogenen Werte durch Auswertung biornetrischer Informationen generiert werden und/oder aus Daten die durch räumliche Erfassung von Objekten und Personen gewonnen werden, extrahiert oder generiert werden. Es können Informationen berücksichtigt werden die sich aus weiteren Erfassungsanordnungen und Eingabevorgängen ergeben. Es können Ereignisse, Aufenthalte, Laufwegsüberschneidungen und Verhaltenskriterien erfasst und ausgewertet werden. Weiterhin können für die Ansteuerung des Gates und/oder der Führungseinrichtung auch Daten herangezogen werden, die insbesondere durch 3D-Scanner, durch Lidar-Einrichtung und/oder auch als Ergebnisse von Zufallsgeneratoren generiert wurden. Es können weiterhin Informationen und Signale für die Ansteuerung des Gates und/oder der Führungseinrichtung herangezogen werden, die durch Systeme für Atemfrequenzmessungen, anderweitige Erfassungs- und Lesegeräte sowie durch anderweitige softwarebasierte Schnittstellen, Programmierschnittstellen und API's bereitgestellt werden.

Insbesondere bei der Heranziehung statistischer Ansätze für die Ansteuerung der Führungseinrichtung können reine Züufallsgeneratoren eingesetzt werden, es können auch

Algorithmen herangezogen werden, deren Häufigkeitsauslösungen noch zusätzlich über einstellbare Web-basierte Software und Anwenderoberflächen beeinflusst werden kann. Die Generierung der Informationen auf deren Grundlage die Führungseinrichtung angesteuert und damit automatisiert positioniert oder entsperrt wird, kann Abhängigkeiten im ersten oder nur im zweiten Laufabschnitt des Gates oder in Kombination entsprechend berücksichtigen. So ist es möglich automatisiert und algorithmisch begründet einen Sicherheitspasscheck, eine Zollkontrolle, eine Gepäck- oder Kofferkontrolle und anderweitige individuelle Interaktionen mit der durch das Gate passierenden und entsprechend durch die Führungseinrichtung geleiteten Person zu veranlassen, indem deren Laufweg durch die automatisiert positionierte Führungseinrichtung festgelegt wird. Hierdurch können insbesondere subjektive Ansätze bei der Auswahl vermieden und das Risiko einer Diskriminierung von Personen verringert werden.

Die erfindungsgemäße Anordnung insbesondere die Ansteuerung und Positionierung der Führungseinrichtung kann nach Maßgabe biometrischer Informationen bewerkstelligt werden. Beispielhaft für biometrische Ansätze sind die Erkennung von einzelnen Personen oder Personengruppen, deren Zusammensetzung und deren Interaktionsverhalten, Weiterhin können biometrische Informationen kombiniert berücksichtigt werden, z.B. die Kombination der Auswertungen von Gesichtserkennungen, Iriserkennungen, Venenerfassungen, Temperaturerfassungund dgl.. Nach Maßgabe von Auswertungen von biometrischen Informationen können durch hierauf basierende automatisierte Ansteuerung und Positionierung der Führungsstruktur Personen in speziell dafür vorgesehene Bereiche gleitet werden. z.B. Personal identifiziert sich mit einer Mitarbeiterkarte an der ersten Berechtigungsstruktur, d.h. im Gate erfolgreich, danach werden zusätzlich biometrische Merkmale abgefragt. Nach Erhalt der Identitätsbestätigung werden zusätzliche Informationen über die Gesundheit der Person z.B. mittels Temperaturmessung abgefragt und entsprechend weiterverarbeitet. Die Anlage kann dann anhand der Konfiguration entsprechend die Person in einzeln dafür vorgesehene Bereiche lenken (z.B. als potentiell Covid-positiv einzustufende Personen in separate Bereiche leiten und hierdurch eine räumliche Isolation oder Verweilung bei geringer Personendichte veranlassen. Weiterhin können die so gewonnenen Informationen automatisch auch an weitere relevante Interaktions-, Dokumentations-, und Verwaltungsbereiche geleitet werden sowie an Informationssysteme zur weiteren Maßnahmenableitung.

Durch Anwendung sog. Lidar-Systeme wird es möglich, eine Erkennung von Einzelmerkmalen z.B. Personen mit Kindern oder zusätzlichen Gegenständen. (Trolley, Rollstuhl, Servicewage/Reinigungswagen) vorzunehmen. Durch den Einsatz dieser Technologie lassen sich in vorteilhafter Weise in Verbindung mit der erfindungsgemäßen Anordnung signifikante Geschwindigkeitszuwächse gegenüber herkömmlichen Ansätzen erreichen. z.B. kann die Reaktionszeit gegenüber Kamera-Sensorik von etwa von ca.1,5s auf 70ms reduziert werden.

Durch die erfindungsgemäße Gate-Anordnung in Kombination mit der beschriebenen Sensorik ergibt sich eine erhebliche Steigerung der Passagefrequenz und damit der Leistungsfähigkeit der Anlage.

Es ist gemäß einem weiteren Aspekt der vorliegenden Erfindung in besonders vorteilhafter Weise möglich, den Schwenkwinkel der Schwenkarme zu reduzieren und nur bei Erkennung einer potentiell inkorrekten Passage eine Nachsteuerung zu veranlassen. Weiterhin ist es möglich, den Schwenkarm der Führungseinrichtung in einer Position zu halten die für eine Ausschleusung einer Person vorgesehen ist und eine Umschaltung für jene Personen zu veranlassen für welche sich eine neutrale Passage ergibt. Hierdurch wird vermieden, dass eine Person während des Aufenthalts im Gate anhand der Aktivität der Führungseinrichtung, insbesondere des Schwenkarms den Vorgang des Schwenkens als diskriminierend oder störend empfindet. Insbesondere bei dieser Betriebswiese kann die Führungseinrichtung eine asymmetrische, d.h. von einer Mittenposition abweichende Grundstellung einnehmen. Insgesamt ermöglicht der Betrieb der erfindungsgemäßen Anordnung mit reduziertem Öffnungswinkel oder auch betriebsparametrisch dynamisch optimierten Öffnungswinkel es, die Anzahl der Personenschleusungen zu erhöhen.

Zur Reduzierung der Montage und Konfigurationskosten kann die erfindungsgemäße Anordnung so ausgebildet sein, dass diese aus vormontierten Baugruppen zusammengesetzt wird und hierbei beispielswiese der Einbau der Sensorik und deren Konfiguration bereits im Werk erfolgen kann und damit zeitsparend Vorort beim Kunden in Betrieb genommen werden kann.

Das Gate kann so ausgebildet sein, dass dessen seitliche Begrenzungsstruktur als geländerartige Struktur mit beispielsweise lediglich einer auf üblicher Geländerhöhe verlaufenden Stange realisiert ist. Die seitliche Begrenzungsstruktur kann auch durch Platten-oder Gitterelemente gebildet sein. Die vertikale Dimensionierung diese Platten- oder Gitterelemente kann so getroffen werden, dass diese Platten- oder Gitterelement einen Überstiegs- und/oder einen Unterquerungsschutz bieten.

Die Sperrfunktion des Gates kann durch verlagerbare Sperren in Form von Armen, Klappen, Stangen oder Flügeln bereitgestellt werden. Diese Strukturen können um vertikale oder auch geneigte Achsen verlagerbar sein. Diese Strukturen können so ausgebildet sein, dass diese durch eine Antriebseinrichtung aktiv verlagert werden, oder sie können auch so ausgebildet sein, dass diese selektiv schaltbar entsperrbar sind und unter der Einwirkung von Kräften der das Gate passierenden Person verlagert werden können. Auch anderweitige Sperrorgane sind möglich, insbesondere einziehbare oder faltbare Türen oder Türsegmente.

Die Führungsstruktur der Führungseinrichtung kann als Platte, Stange, Bügel, Flügel oder Gitter ausgebildet sein. Die Verlagerbarkeit der Führungsstruktur kann insbesondere und lediglich beispielhaft durch Schwenklagerungen oder auch mehrere Lenker beinhaltende Mechaniken bewerkstelligt werden. Bevorzugt wird eine Anbindung der Führungsstruktur an die Ständereinrichtung die ein Schwenken der Führungsstruktur um eine vertikale Achse ermöglicht.

Gemäß einer besonders bevorzugten Ausführungsform der Erfindung sind die Ständereinrichtung und die Gateeinrichtung derart aufeinander abgestimmt angeordnet, dass die Führungsstruktur in der zweiten Führungsstellung in jenem dem ersten Wegabschnitt vor-oder nachgelagerten Wegbereich den ersten Durchgang der zwischen der Ständereinrichtung und der ersten Begrenzungsstruktur definiert ist, freigibt. Diese Freigabe erfolgt, indem die Führungsstruktur aus dem Bereich des ersten Durchgangs hinaus verlagert wird.

Zudem sind die Ständereinrichtung und die Gateeinrichtung vorzugsweise derart aufeinander abgestimmt angeordnet, dass die Führungsstruktur in der zweiten Führungsstellung in jenem vor- oder nachgelagerten Wegbereich einen zweiten Durchgang sperrt, der zwischen der Ständereinrichtung und der zweiten Begrenzungsstruktur definiert ist. Hierdurch wird es auf vorteilhafte Weise möglich, den ersten Durchgang freizugeben und zugleich den zweiten Durchgang zu sperren, so dass eine Passage aus einem Durchgang in den anderen verhindert wird.

Das Gate ist vorzugsweise derart ausgebildet, dass die beiden Begrenzungseinrichtungen zueinander parallel ausgerichtet sind, der erste Laufwegsabschnitt verläuft zwischen diesen beiden Begrenzungseinrichtungen. Es ist möglich, die quer zur Laufrichtung gemessene Breite des ersten Laufwegsabschnittes und den Abstand der Ständereinrichtung von den zugewandten Enden der Begrenzungseinrichtungen so abzustimmen, dass die Breite der Durchgänge im wesentlichen der Breite des ersten Laufwegabschnittes entspricht. Die Ständereinrichtung kann dabei in vorteilhafter Weise derart positioniert angeordnet werden, dass diese im Bereich der Verlängerung einer Mittellinie fußt die mittig zwischen den seitlichen Begrenzungsstrukturen des Gates verläuft.

Wie oben ausgeführt ist vorzugsweise die Führungsstruktur um eine vertikal verlaufende Schwenkachse schwenkbar angeordnet. Hierbei kann die Ständereinrichtung eine sich vertikal erstreckenden Rohr- oder Holmstruktur bilden, die entweder Abschnitte umfasst die als solche um eine Mittenachse der Ständereinrichtung schwenkbar sind, oder auch die gesamte Holmstruktur kann um eine Innenmechanik der Ständereinrichtung herum schwenkbar geführt sein.

Gemäß einem besonderen Aspekt der vorliegenden Erfindung ist in die Ständereinrichtung und oder in die Führungseinrichtung eine Erfassungseinrichtung eingebunden durch welche Informationen gewonnen werden, die maßgeblich für die Ansteuerung der Sperrorgane des Gates und/oder der Führungsstruktur sind.

Die Ständereinrichtung kann so dimensioniert sein, dass diese ein Gehäuse bildet für eine darin aufgenommene Antriebseinrichtung. Die Antriebseinrichtung und die Führungsstruktur sind operativ gekoppelt, so dass nach Maßgabe einer Ansteuerung der Antriebseinrichtung die Führungsstruktur verlagerbar ist. Die Betriebskräfte sind vorzugsweise konstruktiv begrenzt, so dass in Verbindung mit der Verlagerung der Führungsstruktur keine kritischen Einwirkungen auf etwaige mit dieser in Kontakt tretende Personen eintreten können. Die Verlagerungsgeschwindigkeit der Führungsstruktur ist ebenfalls vorzugsweise auf einen Maximalwert begrenzt, der im Falle einer Kollision der Führungsstruktur mit einer Person noch als unkritisch erscheint. Die Verlagerung kann nach Maßgabe eines Geschwindigkeitsprofiles erfolgen, das einen Sanft-Anlauf und eine Sanft-Abbremsung beinhaltet. Die Anordnung kann einen Näherungssensor umfassen so dass eine Verlagerung der Führungsstruktur nur bei hinreichendem Abstand zu einer Person erfolgt oder bei detektierter Annäherung mit einer reduzierten Geschwindigkeit oder Stellkraft.

Alternativ zu einer Verlagerung der Führungsstruktur durch eine Antriebseinrichtung, oder auch in Kombination mit dieser Maßnahme ist es möglich, die Führungseinrichtung so auszubilden, dass in die Ständereinrichtung eine Sperreinrichtung eingebunden ist und dass die Sperreinrichtung nach Maßgabe einer Ansteuerung derselben in einen Sperrzustand oder einen Freigabezustand bringbar ist, wobei in jenem Freigabezustand die Führungsstruktur verlagerbar ist.

Die erfindungsgemäße Anordnung kann in vorteilhafter Weise so ausgebildet sein, dass die Anordnung eine Erfassungseinrichtung zur Erfassung hinsichtlich der Körpertemperatur einer Person indikativer Signale umfasst. Dadurch wird es möglich, in Verbindung mit der Führungsstruktur eine Weiche zu realisieren durch welche Personen mit erhöhter Körpertemperatur ein bestimmter Durchgang, Ausgang oder Laufweg zugewiesen wird. Es können wie eingangs bereits ausgeführt auch anderweitige Informationen, insbesondere die genannten biometrischen Informationen oder aus dem Aufenthalt der Person ableitbare Informationen sowie eben wie oben beschrieben auch algorithmischen Ansätze einschließlich Zufallsgeneratoren für die Ansteuerung der Führungsstruktur herangezogen werden.

Weiterhin kann die Anordnung in vorteilhafter Weise eine Scannereinrichtung oder anderweitige Schnittstelleneinrichtung umfassen, durch welche Daten von einem von der das Gate durchlaufenden Person mitgeführten Display oder einem Träger abgelesen werden können und für die Ansteuerung des Gates und/oder der Führungsstruktur berücksichtigt werden können.

Es ist in vorteilhafter Weise möglich, die Führungseinrichtung derart auszubilden, dass die Ständereinrichtung an eine Bodenplattenstruktur angebunden ist und diese Bodenplattenstruktur eine Lauffläche bildet wobei diese Lauffläche zumindest einen Teil jenes dem ersten Laufwegabschnitt vor- oder nachgelagerten Wegbereiches darstellt. Die Führungseinrichtung kann damit als vormontierte modulartige Baugruppe aufgebaut sein, die bedarfsweise einem Gate beigestellt werden kann und damit im Zusammenspiel mit der Seitenbegrenzung des Gates eine Weichenfunktion bereitstellt. Hierbei ist es möglich, die Bodenplattenstruktur so auszubilden, dass durch diese ein Kabelführungskanal definiert ist über welchen eine kabelgebundene Ansteuerung der Antriebs- oder Sperreichrichtung der Ständereinrichtung bewerkstelligt werden kann. Zudem kann durch in der Bodenplattenstruktur vorbereitete Kabelkanäle auch eine Verkabelung mit Erfassungseinrichtungen oder Schaltern realisiert werden, die sich in der Ständereinrichtung oder der Führungsstruktur oder auch im oberen Endbereich der Ständereinrichtung befinden. Die Bodenplattenstruktur kann weiterhin so ausgebildet sein, dass die durch die Bodenplattenstruktur definierte Lauffläche sich stufenlos an eine den ersten Laufwegabschnitt definierende Fläche des Gates anschließt. Gate und Führungseinrichtung können dabei als Module ausgebildet sein, die über vorbereitete mechanische Schnittstellen miteinander koppelbar sind. Vorzugsweise kommunizieren hierbei im Bereich der Bodenplatte der Führungseinrichtung und der Bodenplatte des Gates vorbereitete Kabeldurchführungen.

Die Anordnung kann so ausgeführt werden, dass lediglich ein Gate mit einer selektiv umschaltbaren Führungseinrichtung zusammenwirkt. Es ist auch möglich, mehrere Gates und Führungseinrichtungen zu einem Personenführungssystem zu kombinieren. Hierbei können beispielsweise mehrere Gateeinrichtungen nebeneinanderliegend vorgesehen werden. Im Zugangsbereich und/oder im Abgangsbereich dieser Gateeinrichtungen sind dann vorzugsweise jene Führungseinrichtungen vorgesehen, die im Zusammenspiel mit den seitlichen Begrenzungsstrukturen der Gateeinrichtungen die Weichenfunktion generieren.

Durch die erfindungsgemäße Zusammenstellung von Gate und Führungseinrichtung mit einer in Personenlaufrichtung dem Gate vorgelagerten Führungseinrichtung wird es möglich, durch die Führungsstruktur eine Führung auf ein linkes oder rechtes Gate zu bewerkstelligen. Durch die erfindungsgemäße Zusammenstellung von Gate und Führungseinrichtung mit einer in Personenlaufrichtung dem Gate nachgelagerten Führungseinrichtung wird es möglich, durch die Führungsstruktur eine Führung der aus dem Gate austretenden Person auf einen linken oder einen rechten Laufweg zu veranlassen.

Gemäß einem weiteren Aspekt der vorliegenden Erfindung wird die eingangs angegebene Aufgabe erfindungsgemäß auch gelöst durch eine Anordnung zur Koordination des Laufweges einer Person nach Maßgabe im Rahmen von bei einer Passage präsenten Informationen, wobei
- sich diese Anordnung aus einem ersten Modul und einem zweiten Modul zusammensetzt,
- das erste Modul eine Gateeinrichtung bildet, die einen ersten Laufwegsabschnitt definiert,
- das zweite Modul eine Führungseinrichtung bildet die nach Maßgabe der Positionierung einer Führungsstruktur ein Durchgehen eines ersten und eines zweiten Durchgangs eines Wegabschnittes ermöglicht, und
- das erste und das zweite Modul derart zusammengestellt sind, dass der erste und der zweite Durchgang sich an einen der Endabschnitte der Gateeinrichtung anschließen.

Vorzugsweise entspricht die Breite der beiden Durchgänge auch der Breite des ersten Laufwegabschnittes. Weiterhin entspricht vorzugsweise auch die horizontal gemessene Länge der Führungsstruktur im wesentlichen der Breite der Durchgänge. Das zweite Modul umfasst eine Bodenplatte. Die Führungsstruktur ist auf dieser Bodenplatte derart positioniert, dass sich der gesamte Verlagerungsbereich der Führungsstruktur über der Bodenplatte erstreckt oder die Projektion des Verlagerungsbereiches der Führungsstruktur auf die Bodenplatte innerhalb der Randkontur der Bodenplatte liegt. Die Führungsstruktur bildet vorzugsweise eine Schwenklagerung. Die durch diese Schwenklagerung definierte Vertikalachse erstreckt sich in dem Randbereich der Bodenplatte auf einer dem ersten Modul abgewandten Seite der Bodenplatte. Die beiden Durchgänge und die angrenzende Querkante des Gates definieren ein nahezu gleichseitiges Dreieck. Die Schwenkachse der Führungsstruktur stellt dabei einen dem Gate abgewandten Eckpunkt dieses Dreiecks dar. Die Enden der Seitenbegrenzung des Gates stellen die weiteren Eckpunkte dieses Dreiecks dar.

Gemäß einem weiteren Aspekt der vorliegenden Erfindung wird die eingangs angegebene Aufgabe erfindungsgemäß auch gelöst durch ein Verfahren zur Koordination des Laufweges einer Person nach Maßgabe präsenter Informationen, wobei diese Person Laufwege durchgeht, die durch eine erstes Modul und ein zweites Modul gebildet werden, wobei das erste Modul eine Gateeinrichtung darstellt und das zweite Modul eine Führungseinrichtung darstellt die ein Öffnen eines ersten und eines zweiten Durchganges ermöglicht, wobei das Öffnen des ersten oder zweiten Durchganges nach Maßgabe von Signalen bewerkstelligt wird, die im Rahmen des Zugangs der Person zu dem Laufweg erhoben werden. Vorzugsweise handelt es sich bei diesen Signalen um biometrische Signale, LIDAR-Signale, um Signale die nach Maßgabe statistischer Methoden generiert werden und/oder um Signale, die Aufschluss über die Körpertemperatur jener Person liefern. Alternativ hierzu kann es sich bei diesen Signalen um Signale handeln, deren Bedeutung hinter der Durchgangsberechtigung durch die Gateeinrichtung zurücksteht oder von dieser unabhängig ist.

Weitere Einzelheiten und Merkmale der Erfindung ergeben sich aus der nachfolgenden Beschreibung in Verbindung mit der Zeichnung. Es zeigt:
- Figur 1: eine perspektivische Darstellung einer erfindungsgemäßen Anordnung in Verbindung mit einer in die Darstellung eingebundenen Funktionsskizze;
- Figur 2: eine Skizze zur weiteren Erläuterung der erfindungsgemäßen Anordnung;
- Figur 3: eine Skizze zur Veranschaulichung des Aufbaus eines durch modulare Zusammenstellung erfindungsgemäßer Komponenten gebildeten Personenleitsystems.

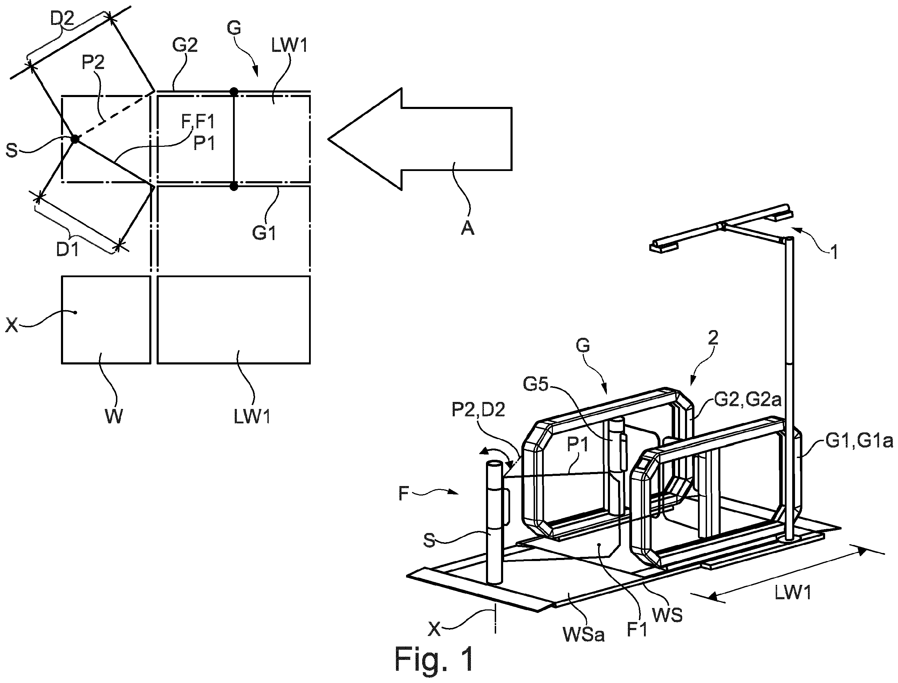

Die Darstellung nach Figur 1 zeigt eine erfindungsgemäße Anordnung zur Koordination des Laufweges einer Person nach Maßgabe von Informationen die hier durch eine Sensoreinrichtung 1 sowie eine Scannereinrichtung 2 erfasst werden. Die Anordnung umfasst eine Gateeinrichtung G, die einen ersten Laufwegsabschnitt LW1 definiert. Die Anordnung umfasst zudem eine erste Begrenzungsstruktur G1, die Teil der Gateeinrichtung G bildet und den ersten Laufwegsabschnitt LW1 an einer ersten Seite begrenzt, sowie auch eine zweite Begrenzungsstruktur G2, die ebenfalls Teil der Gateeinrichtung G bildet und den ersten Laufwegsabschnitt LW1 an einer zweiten Seite begrenzt. Die Anordnung umfasst eine Ständereinrichtung S und eine Führungseinrichtung F, die eine Führungsstruktur F1 umfasst, welche an die Ständereinrichtung S angebunden ist und in eine erste und in eine zweite Führungsstellung P1, P2 bringbar ist. Die Ständereinrichtung S befindet sich in einem dem ersten Laufwegsabschnitt LW1 vor- oder nachgelagerten Wegbereich. Die Ständereinrichtung S und die Gateeinrichtung G sind derart aufeinander abgestimmt angeordnet, dass die Führungsstruktur F1 in der ersten Führungsstellung P1 in jenem vor- oder nachgelagerten Wegbereich W einen ersten Durchgang D1 sperrt, der zwischen der Ständereinrichtung S und der ersten Begrenzungsstruktur G1 definiert ist. Bei der Scannereinrichtung kann es sich insbesondere und dabei in vorteilhafter Weise um ein Lidar-System, um ein 3D-Scansystem und/oder einen Scanner für anderweitige biometrische Signale, insbesondere eine Wärmebildkamera handeln.

Die Ständereinrichtung S und die Gateeinrichtung G sind derart aufeinander abgestimmt angeordnet, dass die Führungsstruktur F1 bei Verlagerung in ihre zweite Führungsstellung P2 in jenem dem ersten Laufwegabschnitt LW1 vor- oder nachgelagerten Wegbereich W den ersten Durchgang D1, der zwischen der Ständereinrichtung S und der ersten Begrenzungsstruktur G1 definiert ist, freigibt. Weiterhin sind bei diesem Ausführungsbeispiel die Ständereinrichtung S und die Gateeinrichtung G derart aufeinander abgestimmt angeordnet, dass die Führungsstruktur F1 in der zweiten Führungsstellung P2 in jenem vor- oder nachgelagerten Wegbereich W einen zweiten Durchgang D2 sperrt, der zwischen der Ständereinrichtung S und der zweiten Begrenzungsstruktur G2 definiert ist.

Das Gate G selbst ist hier derart ausgebildet, dass die beiden Begrenzungseinrichtungen G1, G2 zueinander parallel ausgerichtet sind. Die den Laufweg LW1 seitlich begrenzenden Begrenzungseinrichtungen G1, G2 sind hier als Platten ausgebildet und in einen Rahmen G1a, G2a eingefasst. Der Rahmen G2a bildet einen Gehäuseabschnitt in welchem die oben genannte, hier in ihrem Aufbau nicht weiter dargestellte Scannereinrichtung 2 aufgenommen ist. Durch diese Scannereinrichtung 2 kann bei Eintritt einer Person in den ersten Laufwegsabschnitt LW1 wie durch das Pfeilsymbol A angedeutet ein Datentransfer bewerkstelligt werden, insbesondere durch Abscannen eines mitgeführten Displays oder eines Trägers.

Die Führungseinrichtung F ist hier derart aufgebaut, dass die Führungsstruktur F1 um eine vertikal verlaufende Schwenkachse X in die Positionen P1, P2 schwenkbar ist. In die Ständereinrichtung S ist eine hier nicht weiter dargestellte elektromechanische Antriebseinrichtung eingebunden und die Führungsstruktur F1 ist mit dieser Antriebseinrichtung operativ gekoppelt. Die Führungsstruktur F1 ist damit nach Maßgabe einer Ansteuerung der Antriebseinrichtung in die Positionen P1 oder P2 automatisiert verlagerbar.

Die Sensoreinrichtung 1 ist hier beispielhaft derart ausgebildet, dass diese als Erfassungseinrichtung zur Erfassung hinsichtlich der Körpertemperatur einer Person indikativer Signale fungiert. Bei dieser Anordnung wird die im Gate G befindliche Sperreinrichtung GS nach Maßgabe der über die Scannereinrichtung 2 erfassten Daten angesteuert. Die Führungseinrichtung F wird nach Maßgabe der über die Sensoreinrichtung 1 erfassten Informationen angesteuert. Die Anordnung kann beispielsweise so ausgebildet sein, dass für Personen bei welchen die erfasste Körpertemperatur unter einem definierten Grenzwert liegt die Führungsstruktur F1 in die Position P1 verlagert wird und damit ein Ausgang aus der Anordnung über den Durchgang D2 erfolgt. Liegt die durch die Sensoreinrichtung 1 erfasste Körpertemperatur der in das Gate G eintretenden Person über dem definierten Grenzwert, wird die Führungsstruktur F1 der Führungseinrichtung F in die Position P2 verlagert. In dieser Schwenkstellung ist der Durchgang D2 gesperrt und der Ausgang aus dem Gate G erfolgt über den Wegabschnitt W und hierbei durch den Durchgang D1.

Bei der dargestellten Anordnung ist die Ständereinrichtung S an eine Bodenplattenstruktur WS angebunden. Diese Bodenplattenstruktur WS bildet eine Lauffläche WSa und diese Lauffläche stellt zumindest einen Teil jenes dem ersten Laufwegabschnitt LW1 vor- oder nachgelagerten Wegbereiches W dar.

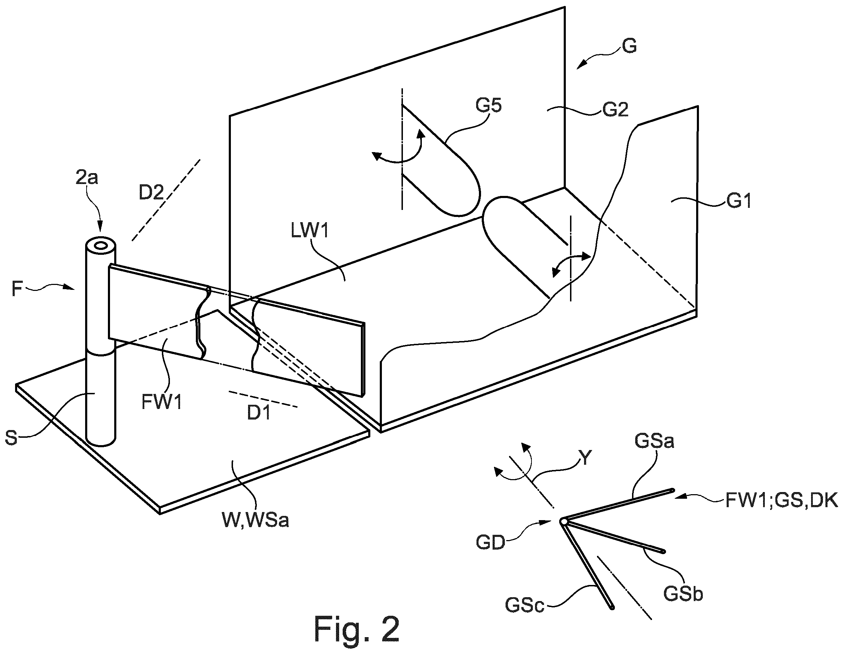

Wie aus der Darstellung nach Figur 2 ersichtlich, bilden die Ständereinrichtung S, die Führungseinrichtung F und die Bodenplattenstruktur WS eine Baugruppe. Diese Baugruppe kann ohne Bearbeitung einer Stellfläche mit einem Gate G gekoppelt werden, so dass über die Führungseinrichtung F im Zusammenspiel mit den Seitenbegrenzungen G1, G2 des Gates G eine Personenweiche realisiert werden kann. Bei dieser Anordnung wird durch Positionierung der Führungsstruktur F1 gegenüber den Seitenbegrenzungen G1, G2 ein entweder links oder rechts an der Ständereinrichtung S vorbeiführender und die Durchgänge D1, D2 durchlaufender Weg geöffnet oder gesperrt.

Es ist auch möglich, die Führungseinrichtung nach Maßgabe statistischer Ansätze anzusteuern. So kann beispielsweise die Ausschleusung einer Person in nach Durchgang durch das Gate unter Einsatz eines Zufallsgenerators bewerkstelligt werden. Für diesen Zufallsgenerator kann beispielsweise über eine Benutzeroberfläche eine Konfiguration vorgenommen werden, die eine Eingabe der Ausschleusewahrscheinlichkeit ermöglicht und die Ausschleusung entsprechend automatisiert veranlasst. Zufallsbasierte Auschleusung kann mit anderen Kriterien kombiniert und verknüpft werden. So kann beispielsweise Kriterien die an sich eine Ausschleusung begründen ein Zufallsereignis überlagert werden, so dass nur mit einer definierten Wahrscheinlichkeit jene Personen auf einen bestimmten Laufweg geführt werden, die an sich Kriterien für eine Selektion dieses Laufweges erfüllen.

Die in dem Gate G befindliche Sperreinrichtung GS ist hier beispielhaft als Doppelflügeltüre ausgebildet. Sie kann konstruktiv auch abweichend ausgebildet sein. Sie kann insbesondere als Drehflügelsperre ausgebildet sein, die beispielsweise wie alternativ skizziert mehrere Arme GSa, GSb GSc aufweist die sich unter gleichen Innenwinkeln von einem Drehgelenksbereich GD hinweg erstrecken und um eine geneigte Achse Y drehbar sind. Die in dem Gate G beispielhaft gezeigte Doppel-Türflügelsperre kann durch ein derartiges Drehkreuz ersetzt werden. Weiterhin kann die Sperreinrichtung GS auch lediglich einen schwenkbar verlagerbaren Türflügel aufweisen.

Es ist auch möglich die an die Ständereinrichtung S angebundene Führungseinrichtung F durch ein derartiges Drehkreuz zu realisieren. Zur Freigabe der Durchgänge D1, D2 wird dann die zulässige Drehrichtung des Drehkreuzes schaltbar festgelegt. In der Grundstellung wirken dabei jeweils zwei Arme des Drehkreuzes DK mit den seitlichen Begrenzungseinrichtungen G1, G2 zusammen. Durch entsprechenden Druck auf einen der Dreharme kann dann das Drehkreuz in Rotation um dessen geneigte Rotationsachse Y versetzt werden, wobei in Abhängigkeit von der zugelassenen Drehrichtung eine Passage des ersten oder des zweiten Durchganges D1, D2 ermöglicht wird. Es ist möglich Anzeigemittel vorzusehen, insbesondere Leuchtmittel in die Führungsstruktur F1, GSa, GSb, GSc einzubinden, die der jeweiligen Person visualisieren welcher Durchgang D1 oder D2 freigegeben ist. In der Ständereinrichtung 3 ist eine Schalteinrichtung 2a vorgesehen durch welche die Führungseinrichtung F entriegelt werden kann.

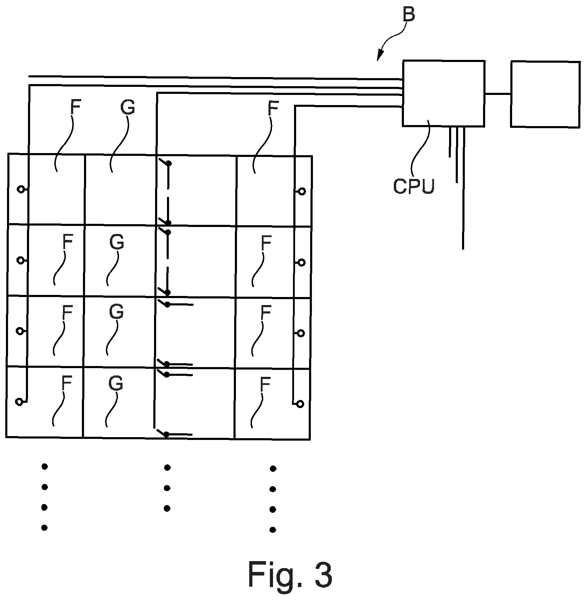

Die Darstellung nach Figur 3 zeigt ein unter Einsatz der erfindungsgemäßen Anordnung aufgebautes Personenleitsystem das mehrere Gates G, sowie mehrere

Führungseinrichtungen F aufweist. Die Gates G sind in nebeneinanderliegender Weise angeordnet, wobei sich benachbarte Gates G jeweils eine Begrenzungseinrichtung teilen. Die Führungseinrichtungen F sind als Weichenmodule an die Zugangs und Ausgangsbereiche der Gates G angefügt. Die Ansteuerung der Führungseinrichtungen F und der Sperrorgane GS der Gates G erfolgt über ein elektronisches Steuersystem CPU. Dieses ist über ein Bussystem B und eine Spannungsversorgungsverkabelung mit den einzelnen Modulen gekoppelt. Jedes Modul verfügt über eine eigene Leistungselektronik und wird über das Steuersystem signaltechnisch angesteuert. Die Standfestigkeit der Führungseinrichtungen F wird über die Bodenplatten der einzelnen Führungseinrichtungen F realisiert, über die Bodenplatten wird auch der für die Verkabelung erforderliche Raum bereitgestellt. Die Bodenplatten der Führungseinrichtungen sind mit den Bodenplatten der Gates G mechanisch koppelbar und bilden eine sich auf einem einheitlichen Bodenniveau erstreckende Lauffläche. Diese kann durch eine rutschhemmende Struktur gebildet sein. In die Bodenplatten können Anzeigemittel eingebunden sein, welche über das Steuersystem ansteuerbar sind und der jeweiligen Person den für sie vorgesehenen Laufweg visualisieren.

Die in Figur 1 dargestellte erfindungsgemäße Anordnung kann beispielweise im Rahmen des Betriebs eines Airports wie folgt zur Anwendung kommen: Die erfindungsgemäße Anordnung wird an einem bislang durch ein einfaches Gate abgesicherten Bereich realisiert, indem unmittelbar an dem Ausgangsbereich des Gates eine erfindungsgemäße Führungseinrichtung platziert wird, deren Führungsstruktur mit der Seitenbegrenzung des Gates zusammenwirkt. Im Durchgangsbereich durch das Gate G wird beispielsweise eine Sensoreinrichtung angeordnet. Diese Sensoreinrichtung erfasst beispielsweise über eine Wärmebildkamera Informationen die Aufschluss über die Körpertemperatur, insbesondere die Gesichtstemperatur einer Person geben, die sich im Bereich des Gates befindet. In diesem Gate ist eine Sperreinrichtung vorgesehen, die sich zunächst in einem Sperrzustand befindet. Zur Freigabe dieser Sperreinrichtung erfolgt zunächst eine Überprüfung einer Zugangsberechtigung. Hierzu wird über eine Scannereinrichtung ein Zugangsberechtigungsnachweis gelesen welchen die jeweilige Person beispielsweise durch ein Smartphone oder ein mitgeführtes Dokument vorweist. Noch während der Prüfung der Zugangsberechtigung erfolgt eine automatisierte Positionierung der Führungsstruktur der Führungseinrichtung. Diese automatisierte Positionierung erfolgt nach Maßgabe der hinsichtlich der Körpertemperatur der Person indikativen Informationen oder dem Auswertungsergebnis einer zusammengefassten Betrachtung mehrerer aus verschiedenen Quellen einschließlich statistischer Ansätze bereitgestellten Informationen. Liegt im Falle einer lediglich die Körpertemperaturbewertung betreffenden Auswertung die Körpertemperatur über einem definierten Grenzwert, erfolgt durch Positionierung der Führungsstruktur in einer bestimmten Stellung eine Führung der das Gate bei Vorliegen einer Durchgangsberechtigung durchschreitenden Person in einen Laufweg, der von dem Laufweg getrennt ist, auf welchen eine Person durch die Führungsstruktur geführt wird deren Temperatur unter dem genannten Grenzwert liegt. Diese Umschaltung der Führungsstruktur zur Personenführung wird während der Prüfung der Zugangsberechtigung abgewickelt indem die Führungsstruktur der Führungseinrichtung automatisiert gegenüber der Seitenbegrenzung des Gates positioniert wird und dabei einen Ausgang aus einem dem Gate nachgelagerten Wegabschnitt durch einen linken oder rechten Durchgang veranlasst.

## Patentansprüche

1. Anordnung zur Koordination des Laufweges einer Person nach Maßgabe präsenter Informationen, mit:
- einer Gateeinrichtung (G), die einen ersten Laufwegsabschnitt (LW1) definiert
- einer ersten Begrenzungsstruktur (G1), die Teil der Gateeinrichtung (G) bildet und den ersten Laufwegsabschnitt (LW1) an einer ersten Seite begrenzt,
- einer zweiten Begrenzungsstruktur (G2), die ebenfalls Teil der Gateeinrichtung (G) bildet und den ersten Laufwegsabschnitt (LW1) an einer zweiten Seite begrenzt
- einer Ständereinrichtung (S) und
- einer Führungseinrichtung (F), die eine Führungsstruktur (F1) umfasst, welche an die Ständereinrichtung (S) angebunden ist und in eine erste und in eine zweite Führungsstellung (P1, P2) bringbar ist, wobei
- sich die Ständereinrichtung (S) in einem dem ersten Laufwegsabschnitt (LW1) vor- oder nachgelagerten Wegbereich (W) befindet und
- die Ständereinrichtung (S) und die Gateeinrichtung (G) derart aufeinander abgestimmt angeordnet sind, dass die Führungsstruktur (F1) in der ersten Führungsstellung (P1) in jenem vor-oder nachgelagerten Wegbereich (W) einen ersten Durchgang (D1) sperrt, der zwischen der Ständereinrichtung (S) und der ersten Begrenzungsstruktur (G1) definiert ist, **dadurch gekennzeichnet,**
- **dass** die Ständereinrichtung (S) an eine Bodenplattenstruktur (WS) angebunden ist und diese Bodenplattenstruktur (WS) eine Lauffläche bildet und diese Lauffläche zumindest einen Teil jenes dem ersten Laufwegabschnitt (LW1) vor- oder nachgelagerten Wegbereiches (W) darstellt und
- die Projektion des Verlagerungsbereiches der Führungsstruktur auf die Bodenplatte innerhalb der Randkontur der Bodenplatte liegt.

2. Anordnung nach Anspruch 1, **dadurch gekennzeichnet, dass** die Ständereinrichtung (S) und die Gateeinrichtung (G) derart aufeinander abgestimmt angeordnet sind, dass die Führungsstruktur (F1) in der zweiten Führungsstellung (P2) in jenem dem ersten Laufwegabschnitt (LW1) vor- oder nachgelagerten Wegbereich (W) den ersten Durchgang (D1), der zwischen der Ständereinrichtung (S) und der ersten Begrenzungsstruktur (G1) definiert ist, freigibt.

3. Anordnung nach Anspruch 1 oder 2, **dadurch gekennzeichnet, dass** die Ständereinrichtung (S) und die Gateeinrichtung (G) derart aufeinander abgestimmt angeordnet sind, dass die Führungsstruktur (F1) in der zweiten Führungsstellung (P2) in jenem vor- oder nachgelagerten Wegbereich (W) einen zweiten Durchgang (D2) sperrt, der zwischen der Ständereinrichtung (S) und der zweiten Begrenzungsstruktur (G2) definiert ist.

4. Anordnung nach wenigstens einem der Ansprüche 1 bis 3, **dadurch gekennzeichnet, dass** die beiden Begrenzungseinrichtungen (G1, G2) zueinander parallel ausgerichtet sind.

5. Anordnung nach wenigstens einem der Ansprüche 1 bis 4, **dadurch gekennzeichnet, dass** die Führungsstruktur (F1) um eine vertikal verlaufende Schwenkachse (X) schwenkbar ist.

6. Anordnung nach wenigstens einem der Ansprüche 1 bis 5, **dadurch gekennzeichnet, dass** in die Ständereinrichtung (S) eine Antriebseinrichtung eingebunden ist und dass die Führungsstruktur (F1) mit dieser Antriebseinrichtung operativ gekoppelt ist und nach Maßgabe einer Ansteuerung der Antriebseinrichtung verlagerbar ist.

7. Anordnung nach wenigstens einem der Ansprüche 1 bis 6, **dadurch gekennzeichnet, dass** in die Ständereinrichtung (S) eine Sperreinrichtung eingebunden ist und dass die Sperreinrichtung nach Maßgabe einer Ansteuerung derselben in einen Sperrzustand oder einen Freigabezustand bringbar ist, wobei in jenem Freigabezustand die Führungsstruktur verlagerbar ist.

8. Anordnung nach wenigstens einem der Ansprüche 1 bis 7, **dadurch gekennzeichnet, dass** die Anordnung eine Erfassungseinrichtung zur Erfassung hinsichtlich der Körpertemperatur einer Person indikativer Signale umfasst und dass die Antriebsund/oder Sperreinrichtung nach Maßgabe einer diese Signale berücksichtigenden Auswertung angesteuert wird und/oder dass die Anordnung wenigstens eine Scannereinrichtung umfasst.

## Claims

1. Arrangement for coordinating the travel path of a person based on available information, comprising:
- a gate device (G) defining a first travel path portion (LW1)
- a first delimiting structure (G1) that forms part of the gate device (G) and delimits the first travel path portion (LW1) on a first side,
- a second delimiting structure (G2) that also forms part of the gate device (G) and delimits the first travel path portion (LW1) on a second side
- a stand device (S) and
- a guide device (F) comprising a guide structure (F1) which is connected to the stand device (S) and can be moved into a first and a second guide position (P1, P2), wherein
- the stand device (S) is located in a path area (W) upstream or downstream of the first travel path portion (LW1) and
- the stand device (S) and the gate device (G) are arranged to be coordinated in such a way that the guide structure (F1) in the first guide position (P1) blocks a first passage (D1) in that upstream or downstream path region (W), which is defined between the stand device (S) and the first delimiting structure (G1), **characterized in that**
- the stand device (S) is connected to a floor plate structure (WS) and this floor plate structure (WS) forms a walking surface and this walking surface represents at least part of the path area (W) upstream or downstream of the first travel path portion (LW1), and
- the projection of the displacement region of the guide structure onto the base plate lies within the edge contour of the base plate.

2. Arrangement according to Claim 1, **characterized in that** the stand device (S) and the gate device (G) are arranged to be coordinated in such a way that the guide structure (F1) in the second guide position (P2) **in that** path region (W) upstream or downstream of the first travel path portion (LW1), releases the first passage (D1) defined between the stand device (S) and the first delimiting structure (G1).

3. Arrangement according to Claim 1 or 2, **characterized in that** the stand device (S) and the gate device (G) are arranged to be coordinated in such a way that the guide structure (F1) in the second guide position (P2) blocks a second passage (D2) **in that** upstream or downstream path region (W), which is defined between the stand device (S) and the second delimiting structure (G2).

4. Arrangement according to at least one of Claims 1 to 3, **characterized in that** the two delimiting devices (G1, G2) are aligned parallel to each other.

5. Arrangement according to at least one of Claims 1 to 4, **characterized in that** the guide structure (F1) can be pivoted about a vertically extending pivot axis (X).

6. Arrangement according to at least one of Claims 1 to 5, **characterized in that** a drive device is integrated into the stand device (S), and **in that** the guide structure (F1) is operatively coupled to this drive device and can be moved in accordance with an actuation of the drive device.

7. Arrangement according to at least one of Claims 1 to 6, **characterized in that** a blocking device is integrated into the stand device (S), and **in that** the blocking device can be brought into a blocking state or a release state in accordance with an actuation, wherein the guide structure can be moved in the release state.

8. Arrangement according to at least one of Claims 1 to 7, **characterized in that** the arrangement comprises a detection device for detecting signals indicative of a person's body temperature, and **in that** the drive and/or blocking device is controlled in accordance with an evaluation taking these signals into account, and/or **in that** the arrangement comprises at least one scanner device.

## Revendications

1. Ensemble destiné à coordonner l'itinéraire d'une personne en fonction d'informations disponibles, avec :
- un dispositif de porte (G), qui définit un premier tronçon d'itinéraire (LW1)
- une première structure de délimitation (G1), qui fait partie du dispositif de porte (G) et délimite le premier tronçon d'itinéraire (LW1) sur un premier côté,
- une deuxième structure de délimitation (G2), qui fait également partie du dispositif de porte (G) et délimite le premier tronçon d'itinéraire (LW1) sur un deuxième côté
- un dispositif de support (S) et
- un dispositif de guidage (F), qui comprend une structure de guidage (F1), qui est reliée au dispositif de support (S) et peut être amenée dans une première et dans une deuxième position de guidage (P1, P2),
- le dispositif de support (S) se trouvant dans une zone de trajet (W) située en amont ou en aval du premier tronçon d'itinéraire (LW1) et
- le dispositif de support (S) et le dispositif de porte (G) étant disposés de manière coordonnée l'un à l'autre de telle manière que la structure de guidage (F1) dans la première position de guidage (P1) bloque dans cette zone de trajet (W) située en amont ou en aval un premier passage (D1), qui est défini entre le dispositif de support (S) et la première structure de délimitation (G1), **caractérisé en ce**
- **que** le dispositif de support (S) est relié à une structure de plaque de base (WS) et ladite structure de plaque de base (WS) forme une surface de marche et ladite surface de marche constitue au moins une partie de ladite zone de trajet (W) située en amont ou en aval du premier tronçon d'itinéraire (LW1) et
- la projection de la zone de déplacement de la structure de guidage sur la plaque de base se situe à l'intérieur du contour de bord de la plaque de base.

2. Ensemble selon la revendication 1, **caractérisé en ce que** le dispositif de support (S) et le dispositif de porte (G) sont disposés de manière coordonnée l'un à l'autre de telle manière que la structure de guidage (F1) dans la deuxième position de guidage (P2) libère, dans ladite zone de trajet (W) située en amont ou en aval du premier tronçon d'itinéraire (LW1), le premier passage (D1), qui est défini entre le dispositif de support (S) et la première structure de délimitation (G1).

3. Ensemble selon la revendication 1 ou 2, **caractérisé en ce que** le dispositif de support (S) et le dispositif de porte (G) sont disposés de manière coordonnée l'un à l'autre de telle manière que la structure de guidage (F1) dans la deuxième position de guidage (P2) bloque, dans ladite zone de trajet (W) située en amont ou en aval, un deuxième passage (D2), qui est défini entre le dispositif de support (S) et la deuxième structure de délimitation (G2).

4. Ensemble selon au moins l'une des revendications 1 à 3, **caractérisé en ce que** les deux dispositifs de délimitation (G1, G2) sont orientés parallèlement l'un à l'autre.

5. Ensemble selon au moins l'une des revendications 1 à 4, **caractérisé en ce que** la structure de guidage (F1) peut pivoter autour d'un axe de pivotement (X) s'étendant verticalement.

6. Ensemble selon au moins l'une des revendications 1 à 5, **caractérisé en ce qu'**un dispositif d'entraînement est intégré dans le dispositif de support (S) et que la structure de guidage (F1) est couplée de manière fonctionnelle audit dispositif d'entraînement et peut être déplacée en fonction d'un pilotage du dispositif d'entraînement.

7. Ensemble selon au moins l'une des revendications 1 à 6, **caractérisé en ce qu'**un dispositif de blocage est intégré dans le dispositif de support (S) et que le dispositif de blocage peut, en fonction de son pilotage, être amené dans un état de blocage ou un état de libération, la structure de guidage pouvant être déplacée dans ledit état de libération.

8. Ensemble selon au moins l'une des revendications 1 à 7, **caractérisé en ce que** l'ensemble comprend un dispositif de détection destiné à détecter des signaux indicatifs par rapport à la température corporelle d'une personne et que le dispositif d'entraînement et/ou de blocage est piloté en fonction d'une évaluation tenant compte desdits signaux et/ou que l'ensemble comprend au moins un dispositif de balayage.
